# EUROPEAN PATENT SPECIFICATION

(11) **EP 3 970 503 B1**
(45) Date of publication and mention of the grant of the patent: **28.10.2026**
(21) Application number: 20196949.0
(22) Date of filing: 18.09.2020
(51) Int. Cl.: A24B 13/00, A24B 15/30

(54) **A POUCH-TYPE PRODUCT FOR ORAL USE COMPRISING CAFFEINE-CONTAINING COMPOSITION AND A METHOD FOR PREPARING THE SAME**
BEUTELARTIGES PRODUKT ZUR ORALEN VERWENDUNG MIT KOFFEINHALTIGER ZUSAMMENSETZUNG UND VERFAHREN ZUR HERSTELLUNG DAVON
PRODUIT DE TYPE SACHET À USAGE ORAL COMPRENANT UNE COMPOSITION CONTENANT DE LA CAFÉINE ET SON PROCÉDÉ DE PRÉPARATION

(43) Date of publication of application: 23.03.2022
(73) Proprietor: Arnold André GmbH, 32257 Bünde (DE)
(72) Inventor: Fröhlich, Michael, 32369 Rahden (DE)
(74) Representative: Erbacher, Martin

(56) References cited:
- WO-A1-03/088755
- WO-A1-2015/117011
- DE-A1- 102012 221 900
- US-A1- 2002 170 567
- US-A1- 2009 041 897
- US-A1- 2009 065 013
- GHIRISAN (MICLAUS) ADINA ET AL: "COMPARATIVE STUDY OF SPRAY-DRYING AND FREEZE-DRYING ON THE SOLUBLE COFFEE PROPERTIES", STUDIA UNIVERSITATIS BABES-BOLYAI. CHEMIA, 29 December 2017 (2017-12-29), RO, pages 309 - 316, XP093332418, ISSN: 1224-7154, Retrieved from the Internet <URL:https://studia.reviste.ubbcluj.ro/index.php/chemia/article/download/8168/7924> DOI: 10.24193/subbchem.2017.4.26

## Description

### TECHNICAL FIELD

The present invention relates to a pouch-type product for oral use comprising a caffeine comprising composition and a method for preparing the same.

### BACKGROUND ART

Caffeine occurs naturally in tea, coffee, and chocolate, and is commonly added to soft drinks, energy drinks and some foods to provide a burst of energy to the consumer. In particular, energy drinks having high caffeine content are very popular. Consumption of caffeine-bearing beverages is very popular at home and in the offices. However, the dispensing of these products on a personal portable level is sometimes difficult.

A variety of caffeine-containing non-beverage products, such as chewing gums, hard candies or lozenges, for oral administration of caffeine are well known in the art. However, such products suffer often have from an unpleasant taste. In addition, a variety of compounds having disfavorable nutritional properties, such as starch-containing components, emulsifiers, fats and waxes, is contained in such products.

US 2007/0031539 A1 discloses caffeine-bearing substances including coffee, tea, kola nut, cacao beans, guarana and yerbamate. A saliva permeable pouch encloses any caffeine-bearing substance as its charge. The filled pouch is sized so that the pouch can be placed in a person's mouth in an area adjacent an outer gum. Saliva from the mouth permeates through the pouch and selectively dissolves the charge releasing the active ingredients like caffeine and attendant sweetener, flavoring and other constituents. A method for placement of the pouch in the mouth and the process of chewing is provided that helps release of active ingredients from the pouch.

US 2016/0324777 A1 discloses an enhanced green tea based product for oral use whereby the nutritional and health benefits of green tea, and additives which shall include some combination of flavoring, preservatives, caffeine, humectants, and water, can be ingested and absorbed by the user.

US 2002/170567 A1 discloses chewable flavor delivery systems comprising caffeine.

However, known respective pouch-typed products have the problem that a control of the release of caffeine from the compositions is insufficient. In particular, the caffeine is released from known compositions to fast leading to an unpleasant caffeine effect during administration. A further drawback of compositions of the prior art is an unsatisfying shelf life particularly caused by moulding. Likewise, there are often problems associated to an unpleasant taste.

Therefore, there is a need of improved caffeine-containing compositions and products containing such compositions for oral administration, in particular improved with respect to the taste (sweetness), caffeine release properties and shelf life thereof.

It is, therefore, an object of the present invention to provide a caffeine-containing composition overcoming drawbacks of the prior art, in particular a caffeine-containing composition having improved sweetness, improved caffeine release properties and shelf life. In particular, it is an object to provide a caffeine-containing composition for oral use suitable to control the release of the caffeine from the composition.

### DISCLOSURE

The invention is defined by the appended claims.

### Caffeine-containing composition

This object is, firstly, achieved by using a composition comprising 15 to 30 wt% glycerol; and a caffeine source containing 0.01 to 10 wt% caffeine with respect to the total weight of the composition, respectively.

The term "caffeine-containing" as used herein means that the inventive composition comprises at least one caffeine source. As used herein, the term "caffeine source" refers to caffeine in any form.

The caffeine contained in the caffeine source may be synthetic caffeine or may be caffeine achieved from a natural caffeine source, for example by extraction of coffee. The caffeine source may be selected from the group consisting of caffeine, caffeine anhydrate, a caffeine salt, preferably caffeine malate, caffeine tartrate, caffeine citrate, or caffeine lactate, and a mixture of two or more thereof.

The composition may comprise the caffeine source in an amount that the amount of caffeine is from 0.1 to 9.5 wt%, alternatively, 0.2 to 9 wt%, alternatively 0.3 to 8.5 wt%, alternatively 0.5 to 8.0 wt%, alternatively 1 to 8 wt%, alternatively 2 to 7.5 wt%, alternatively 3 to 7.5 wt%, alternatively 4 to 7 wt%, alternatively 5 to 6 wt%, alternatively 5.2 to 5.8 wt%, alternatively about 5.5 wt% with respect to the total weight of the composition. The amount of caffeine in the composition is calculated based on caffeine having the formula

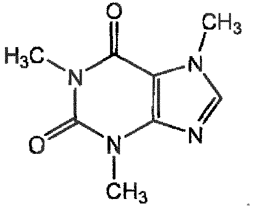

Glycerol is represented by the following formula

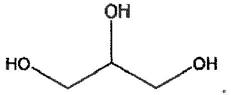

The composition may comprise the glycerol in an amount of 20 to 30 wt% with respect to the total weight of the composition.

The composition may be for use in oral administration.

The composition may be free of nicotine. The composition may be free of tobacco. The composition may be free of starch-containing components. The composition may be free of starch-containing components aside from starch used as a support in flavouring agents. The composition may be free of emulsifiers. The composition may be free of fat, alternatively be free of fat aside from plant-based oil. The composition may be free of wax.

In this regard, "free of" means that the respective compounds are only contained in amounts which cannot be avoided using common preparation and purification processes.

The total amount of all constituents of the composition, that is the different materials (for example, plant materials, chemical compounds etc.) forming the composition adds up to 100 wt%. The composition may comprise one or more further constituent. The composition may comprise two or further constituents. The composition may comprise at least one further solid constituent. In this regard, the term "solid constituent" refers to a constituent which is in the solid state under standard conditions, that is, normal pressure and room temperature (= 23 °C).

The one or more further constituent(s) which may be further comprised in the composition are independently selected from the following compounds.

### Further constituents

The composition further comprises water. The water which may be contained in the composition may be demineralized and/or sterilized. The composition comprises the water in an amount of 5 to 25 wt%, alternatively 10 to 25 wt%, alternatively 12.5 to 22.5 wt%, alternatively 15 to 20 wt%, with respect to the total weight of the composition.

The composition may further comprise isomaltulose (6-*O*-α-D-Glucopyranosyl-D-fructose). The composition may comprise isomaltulose in an amount of 0.1 to 20 wt%, alternatively 5 to 20 wt%, alternatively 5 to 15 wt%, alternatively 7.5 to 12.5 wt%, alternatively 9 to 11 wt%, alternatively about 10 wt%, with respect to the total weight of the composition. The isomaltulose may be used as a flavour enhancing filler.

The composition further comprises xylitol. The composition may comprise xylitol in an amount of 0.1 to 20 wt%, alternatively 5 to 20 wt%, alternatively 5 to 15 wt%, alternatively 7.5 to 12.5 wt%, alternatively 9 to 11 wt%, alternatively about 10 wt%, with respect to the total weight of the composition.

The composition may further comprise one or more medium chain triglycerides. As referred to herein, medium chain triglycerides are triglycerides with two or three fatty acids having an aliphatic tail of 6-12 carbon atoms. The two or three fatty acids in the medium chain triglyceride may be selected independently from the group consisting of caproic acid (C₆), caprylic acid (C₈), capric acid (C₁₀), and lauric acid (C₁₂). Medium chain triglycerides may be considerd as plant-based oil.

The composition may comprise the medium-chain triglycerides in an amount from 1 to 20 wt%, alternatively 5 to 15 wt%, alternatively 7.5 to 12.5 wt%, alternatively 9 to 11 wt%, alternatively about 10 wt% with respect to the total weight of the composition. Medium-chain triglycerides may be used as a humectant or as a solvent for the caffeine.

The composition may further comprise a fiber-type and/or particulate plant material. The plant material may be water-insoluble.

The fiber-type and/or particulate plant material may be selected from the group consisting of bamboo fiber, cocoa fiber, cane sugar fiber, hemp fiber, cereal fiber, particularly preferred wheat fiber or oat fiber, potato fibres, vegetable fibres, particularly preferred pea fibres or carrot fibres, fruit fibres, particularly preferred lemon fibres or orange fibres, cellulose fibres, microcrystalline cellulose and mixtures thereof. The fiber-type and/or particulate plant material may be bamboo fiber.

The may comprise the fiber-type and/or particulate plant material in an amount of 0.1 to 50 wt%, alternatively 1 to 45 wt%, alternatively 5 to 40 wt%, alternatively 10 to 40 wt%, alternatively 20 to 40 wt%, alternatively 25 to 40 wt%, alternatively 30 to 40 wt%, alternatively 30 to 35 wt%, alternatively 10 to 33 wt% with respect to the total weight of the composition.

The composition may further comprise a sweetener. A "sweetener" is a food additive that provides a sweet taste like that of sugar while containing significantly less food energy than sugar-based sweeteners, making it a zero-calorie or low-calorie sweetener. The sweetener may be selected from the group consisting of saccharin, sucralose, neotame and neohesperidine.

The composition may comprise the sweetener in an amount of 0.01 to 5 wt%, alternatively 0.05 to 2 wt%, alternatively 0.1 to 1.5 wt%, alternatively 0.5 to 1.25 wt%, alternatively 0.7 to 1.1 wt%, alternatively 0.75 to 1 wt%, with respect to the total weight of the composition.

The composition may further comprise an acidity regulator (pH regulator, pH adjusting agent etc.). Acidity regulators, or pH control agents, are food additives used to change or maintain pH (acidity or basicity). They can be organic or mineral acids, bases, neutralizing agents, or buffering agents. The acidity regulator may be selected from the group consisting of malic acid, citric acid, tartaric acid, lactic acid, sodium carbonate, potassium carbonate, calcium carbonate, magnesium carbonate, sodium hydrogen carbonate, potassium hydrogen carbonate, calcium hydrogen carbonate, magnesium hydrogen carbonate, sodium hydroxide, potassium hydroxide, calcium hydroxide, magnesium hydroxide, sodium malate, potassium malate, calcium malate, magnesium malate, sodium citrate, potassium citrate, calcium citrate, magnesium citrate, sodium lactate, potassium lactate, calcium lactate, magnesium lactate, sodium tartrate, potassium tartrate, calcium tartrate, magnesium tartrate, and mixtures thereof. Most preferred, the acidity regulator is lactic acid.

The composition may comprise the acidity regulator in an amount of 0.1 to 10 wt%, alternatively 0.5 to 5 wt%, alternatively 1 to 4 wt%, alternatively 1.5 to 3.5 wt%, with respect to the total weight of the composition.

The composition may comprise the glycyrrhizinic acid, a salt thereof or a mixture thereof in an amount of 0.1 to 1 wt%, alternatively 0.3 to 1 wt%, alternatively 0.5 to 0.9 wt%, alternatively 0.7 to 0.9 wt %, alternatively about 0.8 wt%, with respect to the total weight of the composition.

The composition may further comprise an inorganic filler. The inorganic filler may be selected from the group consisting of calcium silicate, magnesium silicate, aluminium silicate, magnesium oxide, calcium carbonate, magnesium carbonate, and silicon dioxide. The composition may comprise the inorganic filler in an amount of 1 to 20 wt%, alternatively 2 to 10 wt%, with respect to the total weight of the composition.

The composition may further comprise an organic filler. The organic filler may be cellulose or a derivative thereof. The composition may comprise the organic filler in an amount of 1 to 20 wt%, alternatively 2 to 10 wt%, with respect to the total weight of the composition.

The composition may further comprise an active substance, preferably selected from taurine, inositol, glucuronolactone, a vitamin, preferably vitamin C or one or more of the vitamin B group, a mineral nutrient, preferably magnesium or calcium and a mixture thereof. The composition may comprise the active substance in an amount of 0.1 to 10 wt% with respect to the total weight of the composition.

The composition may further comprise a flavouring agent. "Flavouring agent" is used herein for a substance used to influence the aroma and/or taste of the composition. The flavouring agent may be selected from the group consisting of menthol, vanillin, peppermint oils, eucalyptus oil, citrus oils, fruit aromas, preferably apple, blueberry, strawberry, raspberry, cherry, coconut, mango, melon, peach, coffee (in all variations from cappuccino to latte), spirits, preferably whisky or rum, sweet-creamy flavours, preferably toffee, popcorn, caramel, chocolate or cream, and spicy flavours, preferably pepper, chili, ginger, cinnamon, cocoa bean, coffee bean and a mixture thereof.

The composition may comprise the flavouring agent in an 0.01 to 10 wt%, alternatively 0.05 to 8 wt%, alternatively 0.1 to 7 wt%, alternatively 1 to 6 wt%, alternatively 2 to 5 wt%, alternatively 3 to 4 wt%, with respect to the total weight of the composition.

The composition may further comprise a taste improving agent, preferably selected from sodium chloride, ammonium chloride and a mixture thereof. The composition may comprise the taste improving agent in an 0.01 to 7.5 wt%, alternatively 0.05 to 5 wt%, alternatively 0.1 to 3 wt%, alternatively 0.2 to 2.5 wt%, alternatively 1 to 2 wt%, about 1.5 wt%, with respect to the total weight of the composition.

The composition may further comprise a food dye, preferably selected from the group consisting of a betalain, a carotenoide, particularly preferred β-carotene, a curcuminoid, a tetrapyrrole derivative, particularly preferred chlorophyll, curcumin, riboflavin, or a mixture thereof.

The composition may comprise the food dye in an amount of 0.01 to 5 wt%, alternatively 0.05 to 2 wt%, alternatively 0.1 to 1.5 wt%, alternatively 0.5 to 1.25 wt%, alternatively 0.7 to 1.1 wt%, alternatively 0.75 to 1 wt%, with respect to the total weight of the composition.

### Method for preparing the caffeine-containing composition

The object is further achieved by a method for preparing the composition as defined herein, the method comprising the steps:
a) providing a mixture of the caffeine source and at least one further solid constituent of the composition in a mixer having at least one cutter head;
b) spraying of water or an aqueous solution onto the mixture provided in the mixer having at least one cutter head and mixing with a rotational speed of the mixer having at least one cutter head of 10 to 500 rpm for 10 seconds to 30 minutes;
c) heating glycerol or a mixture of glycerol and water to a temperature from 30 to 40 °C; and
d) spraying the heated glycerol, respectively the mixture of glycerol and water onto the mixture obtained in step b) and mixing with a rotational speed of the mixer having at least one cutter head of 10 to 500 rpm for 10 seconds to 30 minutes at a temperature from 25 35 °C.

The further solid constituent (respectively the further solid constituents) which may be used in step a) may be selected from a fiber-type and/or particulate plant material, xylitol, isomaltulose, a sweetener, a solid flavouring agent, a solid taste improving agent, an inorganic filler, an active substance, a food dye or a mixture thereof. The further solid constituent (respectively the further solid constituents) which may be used in step a may be a mixture comprising a fiber-type and/or particulate plant material, isomaltulose and a sweetener. The further solid constituents may be a mixture comprising a plant fiber, sodium chloride, xylitol, isomaltulose and sweetener.

The mixer having at least one cutter head may comprise a cylindrical drum, a shaft arranged horizontally in the center of the cylindrical drum. The at least one cutter head may be arranged on the shaft allowing the outermost end thereof to rotate close to the wall of the cylindrical drum.

The mixer having at least one cutter head may be a ploughshare mixer. The ploughshare shovels of the ploughshare mixer may be arranged on a mixing shaft in a horizontal, cylindrical drum rotate closely to the wall. Their peripheral speed and geometric form may selected in such a way to move out a product contained the product bed of the ploughshare mixer against the centrifugal force and in axial direction at the same time. In addition, the shape of the shovels may be selected to allow lifting the product from the drum wall. The mixing elements may have a shape and an arrangement on the shaft to ensure not only a reliable product conveyance but also a sufficient back-mixing of the product. The so-called "mechanical" fluid bed generated in this way, whereby the product is constantly involved in the process, ensures a maximum mixing intensity at even high throughputs and short residence times until the product is discharged out of the mixer via an outlet. Suitable plowshare mixers are well known in the art and commercially available, for example from the supplier Gebrüder Lodige Maschinenbau GmbH, ploughshare^{®} mixers for batch operation.

The aqueous solution which may be sprayed onto the mixture provided in the mixer having at least one cutter head may comprise (besides the water as a solvent) any water-soluble constituent of the composition. The aqueous solution may comprise the acidity regulator, in particular lactic acid. The aqueous solution may be an aqueous sodium carbonate solution. The aqueous solution may comprise additional dissolved caffeine.

The aqueous solution may be sprayed onto the mixture using conventional spraying methods, for example, providing the aqueous solution in a pressure resistant container, the pressure resistant container being arranged above the mixer, and spraying the aqueous solution using compressed air with the pressure of at least 3 bar.

The aqueous solution sprayed in step b) onto the mixture obtained in step a) may comprise further caffeine source dissolved in the aqueous solution, preferably dissolved in a mixture of lactic acid and water. In this case, it may be provided that the aqueous solution of step b) is heated to a temperature of at least 40°C.

The mixing in step b) may be for 10 seconds to 30 minutes, alternatively 15 seconds to 20 minutes, alternatively 20 seconds to 15 minutes, alternatively 30 seconds to 5 minutes.

The mixing in step b) may be 10 to 400, alternatively 20 to 300 rpm, alternatively 30 to 200 rpm, alternatively 50 to 160 rpm, with respect to the rotational speed of the rotational shaft.

The glycerol, respectively the mixture of glycerol and water may be heated to a temperature from 30 to 40 °C outside the mixer, for example in a climatic chamber, a climatic room, a water bath etc. The glycerol may be heated to a temperature from 31 to 39 °C, alternatively 32 to 38 °C, alternatively 33 to 37 °C, alternatively 34 to 36 °C, alternatively about 35 °C.

The mixing in step d) may be for 10 seconds to 30 minutes, alternatively 15 seconds to 20 minutes, alternatively 20 seconds to 15 minutes, alternatively 30 seconds to 5 minutes.

The mixing in step d) may be 10 to 400, alternatively 20 to 300 rpm, alternatively 30 to 200 rpm, alternatively 50 to 160 rpm, with respect to the rotational speed of the rotational shaft.

In step b) and/or step d), the rotational speed of the cutter head may be 1,000 to 5,000 rpm, alternatively 2,000 to 4,000 rpm, alternatively about 3,000 rpm.

The method may further comprise a step e) after the step d), wherein step e) comprises spraying a flavoring agent, a solution containing the flavoring agent or a mixture thereof onto the composition obtained in step d).

### Pouched product

Finally, the object is achieved by a pouch-type product for oral use comprising a pouch-type package and the composition as defined herein arranged in the pouch-type package ("pouched product" of the composition).

The pouch-type product is for oral use. The pouch-type package is a saliva-permeable pouch material. The pouch of the pouch-type product may be made of any suitable saliva-permeable (and preferably non-dissolvable) pouch material, such as non-woven. A binder may be included in the packaging material to facilitate sealing of the material by ultrasonic welding. The pouch material may be a nonwoven material comprising staple fibers of regenerated cellulose, such as viscose rayon staple fibers, and a binder, such as a polyacrylate.

The oral use of the pouch-type product may comprise placing the pouch-type product into the oral cavity, most commonly between the lower gum and lip or upper gum and lip. By contact with the saliva, constituents of the composition may elute from the pouch-type package and are consumed by the consumer. The use may further comprise easy chewing of the pouch-type product, in particular at the beginning of the use.

### ADVANTAGEOUS EFFECTS

A crucial aspect of the present invention is to provide a caffeine-containing composition for oral use having a medium water content and having a (relatively) high glycerol content. By the high amount of glycerol and the medium amount of water (in particular below 35 wt%) in the inventive composition controlled release of caffeine can be achieved. In this regard, "controlled release" refers to both the release during administration of a product comprising the composition in the oral cavity as well as release before administration in the composition.

This release of caffeine can be further controlled by the addition of appropriate further agents (such as medium-chain triglycerides, acidity regulators etc.), in particular in combination with matching caffeine sources.
- For example, if the caffeine source is a caffeine salt and an acidity regulator is added which is suitable to adjust a neutral pH (of about 7), a fast release of the caffeine may be achieved due to the high solubility of the caffeine in saliva.
- If the caffeine source is a caffeine base and the caffeine base is used together with an organic acid in an amount to adjust the pH of the composition to a value of less than 7, conversion at least partially in saliva to caffeine salt and remaining caffeine base (depending on the amount of acid) offers a rather medium speed of availability.
- If the caffeine source is a caffeine base and the caffeine base is used at a pH of about 7, slow availability is achieved.
- If the caffeine source is a caffeine base and the caffeine base is used at a pH of about 7.1 to 8, slowest availability is achieved because of a possible acidity in the mouth or in the recipe is buffered.

The high amount of glycerol was further found to be helpful to provide a usual (natural) "wet mouth feeling" despite the missing high amount water content of above 25%.

Furthermore, the medium water content is helpful to reduce moulding of the composition comprising the same.

In addition, the use of high amounts of glycerol (having a slightly sweet taste) supports the overall sweetness of the product. Moreover, consume of glycerol is safe even in large amounts. Finally, glycerol supports the reception and distribution of flavoring agents.

Xylitol may be used in the composition as a density-enhancing filler which facilitates filling the composition into small pouches. In addition the use of xylitol in the composition has a very positive effect on the sweet taste of the composition without a cariogenic effect. Xylitol additional has known positive effects on dental health.

The further use of isomaltulose in the composition can be used as a density-enhancing filler which facilitates filling the composition into small pouches. In addition the use of isomaltulose in the composition has a positive effect on the sweet taste of the composition without a cariogenic effect.

In the inventive method, the combination of the mixer having at least one cutter head and the spraying of heated glycerol allows surprisingly to achieve a particularly composition. The use of the at least one cutter head, in particular with the specific rotational speed, is helpful to prevent clumping of the constituents (including the glycerol) during preparation of the composition and supports a homogeneous distribution of the water (respectively the aqueous solution) and/or the flavouring agents.

### DETAILED DESCRIPTION

Reference will now be made in detail to the exemplary embodiments of the present invention. The exemplary embodiments are described below, in order to explain the aspects of the present invention without, however, necessarily limiting the invention thereto. Nevertheless specific aspects thereof may, together with general aspects described herein for the disclosure of the invention, be material for realizing embodiments of the invention.

### General preparation route

A mixture comprising anhydrous caffeine (caffeine anhydrate) as a caffeine source, bamboo fiber, and optionally further solid ingredients as listed in below Tables 1 to 3 was provided in a ploughshare mixer (Gebrüder Lodige Maschinenbau GmbH, ploughshare^{®} mixer for batch operation) and slowly mixed with a rotational speed of 50 rpm for 1 minute without using the cutter head of the mixer.

An aqueous solution of lactic acid (acidity regulator) in demineralized and sterilized water was sprayed onto the obtained mixture followed by vigorous mixing using the cutter head of the ploughshare mixer at a rotational speed of 160 rpm for 2 minutes.

Glycerol, optionally as a mixture with water, was heated in a climatic room to 35 °C. The heated glycerol (glycerol mixture) was sprayed onto the mixture obtained in the ploughshare mixer mixture followed by vigorous mixing using the cutter head of the ploughshare mixer at a rotational speed 160 rpm of for 5 minutes.

A mixture of menthol/apple flavouring was heated in a climatic chamber to 35 °C. The heated menthol/apple flavouring mixture was sprayed onto the mixture obtained in the ploughshare mixer mixture followed by vigorous mixing using the cutter head of the ploughshare mixer at a rotational speed of 160 rpm for 2 minutes.

During all of the process steps, the temperature within the ploughshare mixer was controlled below 35°C.

The amounts of the different ingredients were selected for different compositions as set forth below in Tables 1 to 3.

The finished product was packed into small pouches using a common packaging machine.

### Example 1

Caffeine-containing composition with medium content of caffeine anhydrate (caffeine base anhydrous), acidity regulator lactic acid

**Table 1:**

| | kg | wt % |
|---|---|---|
| Glycerol | 30,00 | 30,00 |
| Water | 15,00 | 15,00 |
| Bamboo fiber | 32,50 | 32,50 |
| Magnesium citrate | 2,50 | 2,50 |
| Sucralose | 0,75 | 0,75 |
| Lactic acid | 1,15 | 1,15 |
| Xylitol | 10,00 | 10,00 |
| Anhydrous caffeine | 5,50 | 5,50 |
| Apple flavouring | 2,50 | 2,50 |
| Menthol flavouring | 0,50 | 0,50 |

The composition of Table 1 provides moderate absorption of caffeine through the oral mucosa. The consumer has to "work out" the effect because the water content is low and the caffeine is only converted to caffeine lactate in the mouth when sucking/chewing with the proportion of lactic acid, which is absorbed faster. In the mouth, there is thus a mixture of caffeine base and caffeine lactate.

### Example 2

### Caffeine-containing composition with medium content of caffeine anhydrate (caffeine base anhydrous), acidity regulator lactic acid

In example 2, the process for preparing the composition was the same as described above except that anhydrous caffeine is partly dissolved in the water together with lactic acid and converted to caffeine lactate.

**Table 2:**

| | kg | % |
|---|---|---|
| Glycerol | 30,00 | 25,00 |
| Water | 20,00 | 20,00 |
| Bamboo fiber | 30,50 | 30,50 |
| Magnesium citrate | 2,50 | 2,50 |
| Sucralose | 0,75 | 0,75 |
| Lactic acid | 2,75 | 2,75 |
| Xylitol | 10,00 | 10,00 |
| Anhydrous caffeine | 5,50 | 5,50 |
| Apple flavouring | 2,50 | 2,50 |
| Menthol flavouring | 0,50 | 0,50 |

The composition of Table 2 provides a more rapid absorption of caffeine through the oral mucosa. The caffeine is partly offered as easily water-soluble lactate, which promotes absorption.

### Example 3

### Caffeine-containing composition with medium content of anhydrous caffeine, basic acidity regulator sodium carbonate and medium-chain triglycerides as solvent/dissolving agent for caffeine anhydrate

**Table 3:**

| | kg | % |
|---|---|---|
| Glycerol | 20,00 | 20,00 |
| Water | 15,00 | 15,00 |
| Medium-chain triglycerides | 10,00 | 10,00 |
| Bamboo fiber | 30,50 | 31,00 |
| Magnesium citrate | 2,50 | 2,50 |
| Sucralose | 1,00 | 1,00 |
| Sodium carbonate | 1,00 | 1,00 |
| Xylitol | 10,00 | 10,00 |
| Anhydrous caffeine | 5,50 | 5,50 |
| Apple flavouring | 3,00 | 3,00 |
| Menthol flavouring | 1,00 | 1,00 |

The composition of Table 3 provides slowed down absorption of caffeine through the oral mucosa. The consumer must "work out" the effect. However, the medium-chain triglyceride content supports this, as a part of the anhydrous caffeine dissolves in it and thus becomes more absorbent.

### Comparative Example 1

A composition was prepared as described for Example 1 with the only exceptions that a high water content and a lower glycerin content was used in accordance with Table 4.

**Table 4:**

| | kg | wt % |
|---|---|---|
| Glycerol | 10,00 | 10,00 |
| Water | 45,00 | 45,00 |
| Bamboo fiber | 22,50 | 22,50 |
| Magnesium citrate | 2,50 | 2,50 |
| Sucralose | 0,75 | 0,75 |
| Lactic acid | 1,15 | 1,15 |
| Xylitol | 10,00 | 10,00 |
| Anhydrous caffeine | 5,50 | 5,50 |
| Apple flavouring | 2,50 | 2,50 |
| Menthol flavouring | 0,50 | 0,50 |

An unpleasantly high caffeine-induced effect was observed at the beginning of the oral administration of the composition of Comparative Example 1 which may be released to an unwanted faster release of higher amounts of caffeine immediately after the start of oral administration.

Furthermore, it was found that the composition of Comparative Example 1 showed a lowered shelf life with respect to moulding during storage in comparison to the composition of Example 1.

### Comparative Example 2

A composition was prepared as described for Example 1 with the only exceptions that a lower water content and a higher glycerin content was used in accordance with Table 5.

**Table 5:**

| | kg | wt % |
|---|---|---|
| Glycerol | 40,00 | 40,00 |
| Water | 5,00 | 5,00 |
| Bamboo fiber | 32,50 | 32,50 |
| Magnesium citrate | 2,50 | 2,50 |
| Sucralose | 0,75 | 0,75 |
| Lactic acid | 1,15 | 1,15 |
| Xylitol | 10,00 | 10,00 |
| Anhydrous caffeine | 5,50 | 5,50 |
| Apple flavouring | 2,50 | 2,50 |
| Menthol flavouring | 0,50 | 0,50 |

It was not possible to manufacture a product suitably for oral administration from a respective composition due to its stickiness and caking during the mixing.

### Comparative Example 3

A mixture comprising anhydrous caffeine as a caffeine source, bamboo fiber, sodium chloride, and optionally further solid ingredients as listed in below Tables 1 to 3 was provided in a vat and slowly mixed by shaking the vat.

An aqueous solution of sodium carbonate (acidity regulator) in demineralized and sterilized water was sprayed onto the obtained mixture followed by shaking.

Glycerol was heated in a climatic room to 35 °C. The heated glycerol was sprayed onto the mixture obtained in the ploughshare mixer mixture followed by shaking.

A mixture of menthol/eucalyptus and spearmint was heated in a climatic chamber to 35 °C. The heated glycerol was sprayed onto the mixture obtained in the ploughshare mixer mixture followed by shaking.

During all of the process steps, the temperature within the vat was controlled below 35°C.

The amounts of the different ingredients were selected for different compositions as set forth above in Table 1.

The obtained product exhibited a high degree of clumping as well as low homogeneity and was inappropriate for preparing a pouch- type product.

## Claims

1. Pouch-type product for oral use comprising
- a pouch-type package made of a saliva-permeable pouch material; and
- a composition comprising
(i) 15 to 30 wt% glycerol with respect to the total weight of the composition; and
(ii) a caffeine source containing caffeine in an amount that the amount of caffeine is from 0.01 to 10 wt% with respect to the total weight of the composition;
wherein the composition is arranged in the pouch-type package;
wherein the composition further comprises 5 to 25 wt% water with respect to the total weight of the composition; and
the composition further comprises a sugar substitute, wherein the sugar substitute is xylitol.

2. Pouch-type product for oral use according to any of the preceding claims, wherein the composition further comprises a medium chain triglyceride.

3. Pouch-type product for oral use according to any of the preceding claims, wherein the composition further comprises a fiber-type and/or particulate plant material, preferably selected from the group consisting of bamboo fiber, cocoa fiber, cane sugar fiber, hemp fiber, cereal fiber, particularly preferred wheat fiber or oat fiber, potato fibres, vegetable fibres, particularly preferred pea fibres or carrot fibres, fruit fibres, particularly preferred lemon fibres or orange fibres, cellulose fibres, microcrystalline cellulose and mixtures thereof.

4. Pouch-type product for oral use according to any of the preceding claims, wherein the caffeine source is selected from the group consisting of caffeine, caffeine anhydrate, a caffeine salt, preferably caffeine malate, caffeine tartrate, caffeine citrate, or caffeine lactate, and a mixture thereof.

5. Pouch-type product for oral use according to any of the preceding claims, wherein the composition further comprises an acidity regulator, preferably selected from the group consisting of malic acid, citric acid, tartaric acid, lactic acid, sodium carbonate, potassium carbonate, calcium carbonate, magnesium carbonate, sodium hydrogen carbonate, potassium hydrogen carbonate, calcium hydrogen carbonate, magnesium hydrogen carbonate, sodium hydroxide, potassium hydroxide, calcium hydroxide, magnesium hydroxide, sodium malate, potassium malate, calcium malate, magnesium malate, sodium citrate, potassium citrate, calcium citrate, magnesium citrate, sodium lactate, potassium lactate, calcium lactate, magnesium lactate, sodium tartrate, potassium tartrate, calcium tartrate, magnesium tartrate, and mixtures thereof.

6. Pouch-type product for oral use according to any of the preceding claims, wherein the composition further comprises an inorganic filler, preferably selected from the group consisting of calcium silicate, magnesium silicate, aluminum silicate, magnesium oxide, calcium carbonate, magnesium carbonate, silicon dioxide.

7. Pouch-type product for oral use according to any of the preceding claims, wherein the composition further comprises an active substance, preferably selected from taurine, inositol, glucuronolactone, a vitamin, a mineral nutrient and a mixture thereof.

8. Pouch-type product for oral use according to any of the preceding claims, wherein the composition further comprises a flavouring agent, preferably selected from the group consisting of menthol, vanillin, peppermint oils, eucalyptus oil, citrus oils, fruit aromas, preferably apple, blueberry, strawberry, raspberry, cherry, coconut, mango, melon, peach, coffee (in all variations from cappuccino to latte), spirits, preferably whisky or rum, sweet-creamy flavours, preferably toffee, popcorn, caramel, chocolate or cream, and spicy flavours, preferably pepper, chili, ginger, cinnamon, cocoa bean, coffee bean and a mixture thereof.

9. Pouch-type product for oral use according to any of the preceding claims, wherein the composition further comprises a food dye, preferably selected from the group consisting of a betalain, a carotenoide, particularly preferred β-carotene, a curcuminoid, a tetrapyrrole derivative, particularly preferred chlorophyll, curcumin, riboflavin, or a mixture thereof.

10. A method for preparing the pouch-type product for oral use according to any of the preceding claims, comprising preparing the composition with a method comprising the steps:
a) providing a mixture of the caffeine source and at least one solid constituent of the composition in a mixer having at least one cutter head;
b) spraying of water or an aqueous solution onto the mixture provided in the mixer having at least one cutter head and mixing with a rotational speed of the mixer having at least one cutter head of 10 to 500 rpm for 10 seconds to 30 minutes;
c) heating glycerol or a mixture of glycerol and water to a temperature from 30 to 40 °C; and
d) spraying the heated glycerol, respectively the mixture of glycerol and water onto the mixture obtained in step b) and mixing with a rotational speed of the mixer having at least one cutter head of 10 to 500 rpm for 10 seconds to 30 minutes at a temperature from 25 to 35°C.

11. Method according to claim 10, wherein the mixer having at least one cutter head is a ploughshare mixer.

12. Method according to claim 10 or 11, wherein the method comprises a further step e) after the step d), wherein step e) comprises
- spraying a flavoring agent, a solution containing the flavoring agent or a mixture thereof onto the composition obtained in step d).

## Patentansprüche

1. Beutelartiges Produkt zur oralen Verwendung, umfassend
- eine beutelartige Verpackung, die aus einem speicheldurchlässigen Beutelmaterial hergestellt ist; und
- eine Zusammensetzung, umfassend
(i) 15 bis 30 Gew.-% Glycerin, bezogen auf das Gesamtgewicht der Zusammensetzung; und
(ii) eine Koffeinquelle, die Koffein in einer solchen Menge enthält, dass die Menge an Koffein 0,01 bis 10 Gew.-%, bezogen auf das Gesamtgewicht der Zusammensetzung, beträgt;
wobei die Zusammensetzung in der beutelartigen Verpackung angeordnet ist;
wobei die Zusammensetzung ferner 5 bis 25 Gew.-% Wasser, bezogen auf das Gesamtgewicht der Zusammensetzung, umfasst; und
die Zusammensetzung ferner einen Zuckerersatz umfasst, wobei der Zuckerersatz Xylitol ist.

2. Beutelartiges Produkt zur oralen Verwendung nach einem der vorhergehenden Ansprüche, wobei die Zusammensetzung ferner ein mittelkettiges Triglycerid umfasst.

3. Beutelartiges Produkt zur oralen Verwendung nach einem der vorhergehenden Ansprüche, wobei die Zusammensetzung ferner ein faserartiges und/oder teilchenförmiges Pflanzenmaterial umfasst, vorzugsweise ausgewählt aus der Gruppe bestehend aus Bambusfaser, Kakaofaser, Rohrzuckerfaser, Hanffaser, Getreidefaser, besonders bevorzugt Weizenfaser oder Haferfaser, Kartoffelfasern, Gemüsefasern, besonders bevorzugt Erbsenfasern oder Karottenfasern, Fruchtfasern, besonders bevorzugt Zitronenfasern oder Orangenfasern, Cellulosefasern, mikrokristalliner Cellulose und Mischungen davon.

4. Beutelartiges Produkt zur oralen Verwendung nach einem der vorhergehenden Ansprüche, wobei die Koffeinquelle ausgewählt ist aus der Gruppe bestehend aus Koffein, Koffeinanhydrat, einem Koffeinsalz, vorzugsweise Koffeinmalat, Koffeintartrat, Koffeincitrat oder Koffeinlactat, und einer Mischung davon.

5. Beutelartiges Produkt zur oralen Verwendung nach einem der vorhergehenden Ansprüche, wobei die Zusammensetzung ferner einen Säureregulator umfasst, vorzugsweise ausgewählt aus der Gruppe bestehend aus Äpfelsäure, Zitronensäure, Weinsäure, Milchsäure, Natriumcarbonat, Kaliumcarbonat, Calciumcarbonat, Magnesiumcarbonat, Natriumhydrogencarbonat, Kaliumhydrogencarbonat, Calciumhydrogencarbonat, Magnesiumhydrogencarbonat, Natriumhydroxid, Kaliumhydroxid, Calciumhydroxid, Magnesiumhydroxid, Natriummalat, Kaliummalat, Calciummalat, Magnesiummalat, Natriumcitrat, Kaliumcitrat, Calciumcitrat, Magnesiumcitrat, Natriumlactat, Kaliumlactat, Calciumlactat, Magnesiumlactat, Natriumtartrat, Kaliumtartrat, Calciumtartrat, Magnesiumtartrat und Mischungen davon.

6. Beutelartiges Produkt zur oralen Verwendung nach einem der vorhergehenden Ansprüche, wobei die Zusammensetzung ferner einen anorganischen Füllstoff umfasst, vorzugsweise ausgewählt aus der Gruppe bestehend aus Calciumsilicat, Magnesiumsilicat, Aluminiumsilicat, Magnesiumoxid, Calciumcarbonat, Magnesiumcarbonat, Siliciumdioxid.

7. Beutelartiges Produkt zur oralen Verwendung nach einem der vorhergehenden Ansprüche, wobei die Zusammensetzung ferner einen Wirkstoff umfasst, vorzugsweise ausgewählt aus Taurin, Inositol, Glucuronolacton, einem Vitamin, einem Mineralnährstoff und einer Mischung davon.

8. Beutelartiges Produkt zur oralen Verwendung nach einem der vorhergehenden Ansprüche, wobei die Zusammensetzung ferner einen Aromastoff umfasst, vorzugsweise ausgewählt aus der Gruppe bestehend aus Menthol, Vanillin, Pfefferminzölen, Eukalyptusöl, Zitrusölen, Fruchtaromen, vorzugsweise Apfel, Heidelbeere, Erdbeere, Himbeere, Kirsche, Kokosnuss, Mango, Melone, Pfirsich, Kaffee (in allen Varianten von Cappuccino bis Latte), Spirituosen, vorzugsweise Whisky oder Rum, süßcremigen Aromen, vorzugsweise Toffee, Popcorn, Karamell, Schokolade oder Sahne, und würzigen Aromen, vorzugsweise Pfeffer, Chili, Ingwer, Zimt, Kakaobohne, Kaffeebohne und einer Mischung davon.

9. Beutelartiges Produkt zur oralen Verwendung nach einem der vorhergehenden Ansprüche, wobei die Zusammensetzung ferner einen Lebensmittelfarbstoff umfasst, vorzugsweise ausgewählt aus der Gruppe bestehend aus einem Betalain, einem Carotinoid, besonders bevorzugt ß-Carotin, einem Curcuminoid, einem Tetrapyrrolderivat, besonders bevorzugt Chlorophyll, Curcumin, Riboflavin oder einer Mischung davon.

10. Verfahren zur Herstellung des beutelartigen Produkts zur oralen Verwendung nach einem der vorhergehenden Ansprüche, umfassend das Herstellen der Zusammensetzung mit einem Verfahren, das die folgenden Schritte umfasst:
a) Bereitstellen einer Mischung aus der Koffeinquelle und mindestens einem festen Bestandteil der Zusammensetzung in einem Mischer mit mindestens einem Schneidkopf;
b) Sprühen von Wasser oder einer wässrigen Lösung auf die in dem Mischer mit mindestens einem Schneidkopf bereitgestellte Mischung und Mischen mit einer Drehzahl des Mischers mit mindestens einem Schneidkopf von 10 bis 500 U/min für 10 Sekunden bis 30 Minuten;
c) Erhitzen von Glycerin oder einer Mischung aus Glycerin und Wasser auf eine Temperatur von 30 bis 40 °C; und
d) Sprühen des erhitzten Glycerins bzw. der Mischung aus Glycerin und Wasser auf die in Schritt b) erhaltene Mischung und Mischen mit einer Drehzahl des Mischers mit mindestens einem Schneidkopf von 10 bis 500 U/min für 10 Sekunden bis 30 Minuten bei einer Temperatur von 25 bis 35 °C.

11. Verfahren nach Anspruch 10, wobei der Mischer mit mindestens einem Schneidkopf ein Pflugscharmischer ist.

12. Verfahren nach Anspruch 10 oder 11, wobei das Verfahren einen weiteren Schritt e) nach dem Schritt d) umfasst, wobei Schritt e) Folgendes umfasst:
- Sprühen eines Aromastoffs, einer Lösung, die den Aromastoff enthält, oder einer Mischung davon auf die in Schritt d) erhaltene Zusammensetzung.

## Revendications

1. Produit à usage oral semblable à un sachet comprenant
- un conditionnement semblable à un sachet constitué d'un matériau perméable à la salive ; et
- une composition comprenant
(i) du glycérol à une quantité, rapportée au poids total de la composition, qui va de 15 à 30 % en poids ; et
(ii) une source de caféine contenant de la caféine à une quantité, rapportée au poids total de la composition, telle que la quantité de caféine va de 0,01 à 10 % en poids ;
où la composition est placée dans le conditionnement semblable à un sachet ;
où la composition comprend en outre de l'eau à une quantité, rapportée au poids total de la composition, qui va de 5 à 25 % en poids ; et
la composition comprend en outre un succédané du sucre, le succédané du sucre étant le xylitol.

2. Produit à usage oral semblable à un sachet selon l'une quelconque des revendications précédentes, où la composition comprend en outre un triglycéride à chaîne moyenne.

3. Produit à usage oral semblable à un sachet selon l'une quelconque des revendications précédentes, où la composition comprend en outre un matériau végétal de type fibreux et/ou particulaire préférablement sélectionné dans le groupe consistant en les suivants : fibre de bambou, fibre de cacao, fibre de canne à sucre, fibre de chanvre, fibre de céréale, la fibre de blé ou la fibre d'avoine étant particulièrement préférée, fibres de pomme de terre, fibres de légume, les fibres de poids ou les fibres de carotte étant particulièrement préférées, fibres de fruit, les fibres de citron ou les fibres d'orange étant particulièrement préférées, fibres de cellulose, cellulose microcristalline et mélanges de celles-ci.

4. Produit à usage oral semblable à un sachet selon l'une quelconque des revendications précédentes, où la source de caféine est sélectionnée dans le groupe consistant en les suivantes : caféine, anhydrate de caféine, sel de caféine, préférablement malate de caféine, tartrate de caféine, citrate de caféine ou lactate de caféine et mélange de ceux-ci.

5. Produit à usage oral semblable à un sachet selon l'une quelconque des revendications précédentes, où la composition comprend en outre un régulateur de l'acidité préférablement sélectionné dans le groupe consistant en les suivants : acide malique, acide citrique, acide tartrique, acide lactique, carbonate de sodium, carbonate de potassium, carbonate de calcium, carbonate de magnésium, hydrogénocarbonate de sodium, hydrogénocarbonate de potassium, hydrogénocarbonate de calcium, hydrogénocarbonate de magnésium, hydroxyde de sodium, hydroxyde de potassium, hydroxyde de calcium, hydroxyde de magnésium, malate de sodium, malate de potassium, malate de calcium, malate de magnésium, citrate de sodium, citrate de potassium, citrate de calcium, citrate de magnésium, lactate de sodium, lactate de potassium, lactate de calcium, lactate de magnésium, tartrate de sodium, tartrate de potassium, tartrate de calcium, tartrate de magnésium et mélanges de ceux-ci.

6. Produit à usage oral semblable à un sachet selon l'une quelconque des revendications précédentes, où la composition comprend en outre une matière de remplissage inorganique préférablement sélectionnée dans le groupe consistant en les suivantes : silicate de calcium, silicate de magnésium, silicate d'aluminum, oxyde de magnésium, carbonate de calcium, carbonate de magnésium, dioxyde de silicium.

7. Produit à usage oral semblable à un sachet selon l'une quelconque des revendications précédentes, où la composition comprend en outre une substance active préférablement sélectionnée parmi la taurine, l'inositol, la glucuronolactone, une vitamine, un nutriment minéral et un mélange de ceux-ci.

8. Produit à usage oral semblable à un sachet selon l'une quelconque des revendications précédentes, où la composition comprend en outre un agent aromatisant préférablement sélectionné dans le groupe consistant en les suivants : menthol, vanilline, huiles de menthe poivrée, huile d'eucalyptus, huiles d'agrumes, arômes de fruit, préférablement pomme, myrtille, fraise, framboise, cerise, noix de coco, mangue, melon, pêche, café (dans toutes les variations, du cappuccino au latte), spiritueux, préférablement whisky ou rhum, saveurs sucrées-crémeuses, préférablement caramel au beurre, popcorn, caramel, chocolat ou crème et saveurs épicées, préférablement poivre, piment, gingembre, cannelle, fève de cacao, grain de café et mélange de ceux-ci.

9. Produit à usage oral semblable à un sachet selon l'une quelconque des revendications précédentes, où la composition comprend en outre un colorant alimentaire préférablement sélectionné dans le groupe consistant en une bétalaïne, un caroténoïde, le β-carotène étant particulièrement préféré, un curcuminoïde, un dérivé tétrapyrrolique, la chlorophylle, la curcumine et la riboflavine étant particulièrement préférées, ou un mélange de ceux-ci.

10. Procédé de préparation du produit à usage oral semblable à un sachet selon l'une quelconque des revendications précédentes, comprenant la préparation de la composition par une méthode comprenant les étapes suivantes :
a) transfert d'un mélange de la source de caféine et d'au moins un constituant solide de la composition dans un mélangeur doté d'au moins une tête de coupe ;
b) pulvérisation d'eau ou d'une solution aqueuse sur le mélange transféré dans le mélangeur doté d'au moins une tête de coupe et mélange à une vitesse de rotation du mélangeur doté d'au moins une tête de coupe qui va de 10 à 500 tpm pendant de 10 secondes à 30 minutes ;
c) chauffage du glycérol ou d'un mélange de glycérol et d'eau à une température qui va de 30 à 40 °C ; et
d) pulvérisation du glycérol ou du mélange de glycérol et d'eau, respectivement, sur le mélange obtenu à l'étape b) et mélange à une vitesse de rotation du mélangeur doté d'au moins une tête de coupe qui va de 10 à 500 tpm pendant de 10 secondes à 30 minutes à une température qui va de 25 à 35 °C.

11. Procédé selon la revendication 10, où le mélangeur doté d'au moins une tête de coupe est un mélangeur à socs.

12. Procédé selon la revendication 10 ou 11 où, après l'étape d), le procédé comprend une étape e) supplémentaire, l'étape e) comprenant
- la pulvérisation d'un agent aromatisant, d'une solution contenant l'agent aromatisant ou d'un mélange de ceux-ci sur la composition obtenue à l'étape d).
